# EUROPEAN PATENT APPLICATION

(11) **EP 4 787 130 A1**
(43) Date of publication of application: **05.08.2026**
(21) Application number: 23953984.4
(22) Date of filing: 29.11.2023
(51) Int. Cl.: G06F 3/041, G06F 3/044

(54) **FLEXIBLE TOUCH-CONTROL DISPLAY PANEL**

(30) Priority: 28.09.2023 CN 202311282715
(71) Applicant: Wuhan China Star Optoelectronics Semiconductor Display Technology Co., Ltd., Wuhan, Hubei 430079 (CN)
(72) Inventor: DU, Zuchen, Wuhan, Hubei 430079 (CN)
(74) Representative: Zhu, Puxing
(86) International application number: PCT/CN2023/134995
(87) International publication number: WO 2025/065851

(57) **Abstract**

A flexible touch display panel is provided, including a display region, a bonding region, and a bending region. The flexible touch display panel includes a plurality of bonding terminals located in the bonding region, a plurality of touch electrodes located in the display region, and a plurality of touch traces. The touch trace includes a first trace portion and a second trace portion connected to each other, the first trace portion is connected to a corresponding touch electrode, and the second trace portion is connected to a corresponding bonding terminal. The first trace portion extends from the display region to the bonding region through the bending region, and the second trace portion is located in the bonding region.

## Description

This application claims priority to Chinese Patent Application No. 202311282715.6, entitled "FLEXIBLE TOUCH DISPLAY PANEL," filed with the China National Intellectual Property Administration on September 28, 2023, the entire contents of the aforementioned application are incorporated herein by reference.

### TECHNICAL FIELD

The present application relates to a field of display technologies, and in particular to a flexible touch display panel.

### BACKGROUND

With the continuous development of foldable display products in the consumer market, people have higher and higher requirements for active pen technology of foldable mobile phones. In the existing touch technology, the touch sensing electrodes in the display region are connected to the touch pins outside the display region through the touch traces. Since the distances between the touch sensing electrodes and the touch pins are different, there may be impedance differences between the touch traces at different positions, which may adversely affect the transmission of touch signals. Therefore, the touch trace is generally wound at the border of the display panel, or the width of the touch trace at the border is increased, and the touch accuracy requirement of the active pen is far greater than the conventional finger touch accuracy, and the wider touch trace or more windings will cause the risk of false touch.

Therefore, the existing active pen touch display technology has a high risk of false touch.

### SUMMARY

Embodiments of the present application provide a flexible touch display panel to address the technical problem in existing flexible touch display panels where the width of the trace at the border is large or trace is wound at the border, leading to a high risk of false touch in active pen touch control.

To address the technical problems aforementioned, the present application provides technical solutions as follows.

The embodiments of the present application provide a flexible touch display panel, including a display region, a bonding region, and a bending region located between the display region and the bonding region, where the flexible touch display panel includes a plurality of bonding terminals located in the bonding region; a plurality of touch electrodes arranged in an array and located in the display region; a plurality of touch traces, where each of the touch traces comprises a first trace portion and a second trace portion connected to each other, the first trace portion is connected to a corresponding one of the touch electrodes, and the second trace portion is connected to a corresponding one of the bonding terminals; wherein the first trace portion extends from the display region to the bonding region through the bending region, the second trace portion is located in the bonding region, and the second trace portion comprises a serpentine trace.

The embodiments of the present application further provides a flexible touch display panel, including a display region, a bonding region, and a bending region located between the display region and the bonding region, where the flexible touch display panel includes a plurality of bonding terminals located in the bonding region, and the bonding terminals are electrically connected to a driving chip; a plurality of touch electrodes arranged in an array and located in the display region; a plurality of touch traces, wherein each of the touch traces comprises a first trace portion and a second trace portion connected to each other, the first trace portion is connected to a corresponding one of the touch electrodes, and the second trace portion is connected to a corresponding one of the bonding terminals; wherein the first trace portion extends from the display region to the bonding region through the bending region, the second trace portion is located in the bonding region, and the second trace portion comprises a serpentine trace.

### BRIEF DESCRIPTION OF THE DRAWINGS

FIG. 1 is a schematic view of a structure of a flexible touch display panel according to an embodiment of the present application.
FIG. 2 is a schematic plan view of a touch electrode according to an embodiment of the present application.
FIG. 3 is an unbent schematic view of a flexible touch display panel according to an embodiment of the present application.
FIG. 4 is an enlarged schematic view of a touch trace at A in FIG. 3.
FIG. 5 is a schematic view of a partial film stack structure of a flexible touch display panel according to an embodiment of the present application.
FIG. 6 is a schematic view of another film stack structure of a flexible touch display panel according to an embodiment of the present application.
FIG. 7 is a schematic view of a structure of a touch trace and a first power line according to an embodiment of the present application.
FIG. 8 is an enlarged schematic view of a touch trace at B in FIG. 4.

### DETAILED DESCRIPTION

A clear and complete description of the technical solutions in the embodiments of the present application will be given in conjunction with the accompanying drawings in the embodiments of the present application. It will be apparent that the described embodiments are only a part of the examples of the present application, and not all examples. Based on the embodiments of the present application, all other embodiments obtained by those skilled in the art without involving any creative labor are within the scope of the present application.

In description of the present application, it should be understood that the terms such as "length", "width", "upper", "lower", etc. indicating an orientation or a positional relationship are based on an orientation or a positional relationship shown in the accompanying drawings, which are merely intended to facilitate descriptions of the present application and simplify the descriptions, and are not intended to indicate or imply that a device or an element must have a specific orientation, be constructed and operated in a specific orientation, and therefore cannot be construed as a limitation of the present application. Moreover, the terms "first" and "second" are used merely for descriptive purposes and should not be construed to indicate or imply relative importance or to implicitly specify the quantity of the technical features indicated. Thus, features defined by first and second may explicitly or implicitly include one or more of the features. In the description of the present application, multiple means two or more, unless otherwise specifically defined.

In the description of the present application, it should be noted that, unless otherwise expressly specified and defined, the term "connection" should be understood in a broad sense, for example, it may be an integral connection, an electrical connection or mutual communication; they can refer to a direct connection or an indirect connection through an intermediary, or to spatial communication or interaction between the internal components of two elements. Those ordinary skilled in the art can understand the specific meanings of the above terms in the present application according to specific situations.

In description of the disclosure, unless specified or limited otherwise, a structure in which a first feature is on a second feature may include an embodiment in which the first feature is in direct contact with the second feature, and may also include an embodiment in which the first feature and the second feature are not in direct contact with each other, but are contacted via an additional feature formed therebetween. Furthermore, a first feature on a second feature may include an embodiment in which the first feature is right or obliquely on, the second feature, or just means that the first feature is at a height higher than that of the second feature. The following disclosure provides many different embodiments or examples to implement different structures of the present application. To simplify the description of the present application, the parts and settings of particular examples are described below. Of course, these examples are merely illustrative and are not intended to limit the present application. In addition, same reference numbers and/or reference letters may be used in different examples for the purpose of simplification and clarity and does not indicate the relationship between the various embodiments and/or settings discussed. Moreover, the present application provides specific examples of various processes and materials, but those skilled in the art can recognize the applicability of other processes and/or the use of other materials.

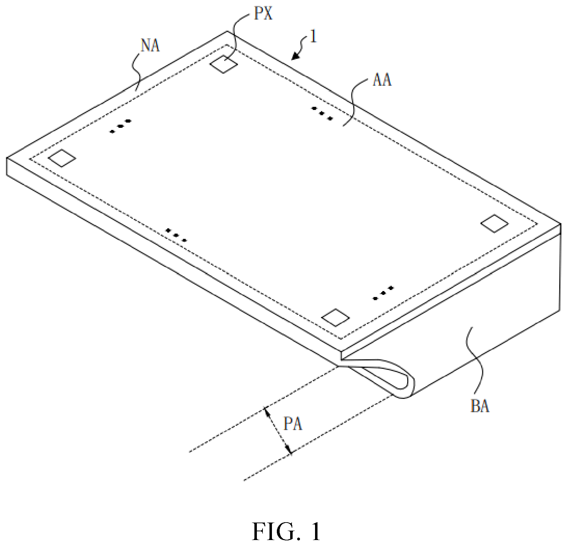

Referring to FIG. 1, the embodiments of the present application provide a flexible touch display panel 1, including a display region AA and a non-display region NA, the display region AA is configured to display an image, and the non-display region NA does not display an image and is configured to accommodate various signal traces, gate driver on array (GOA) circuits, bonding terminals 190, and the like.

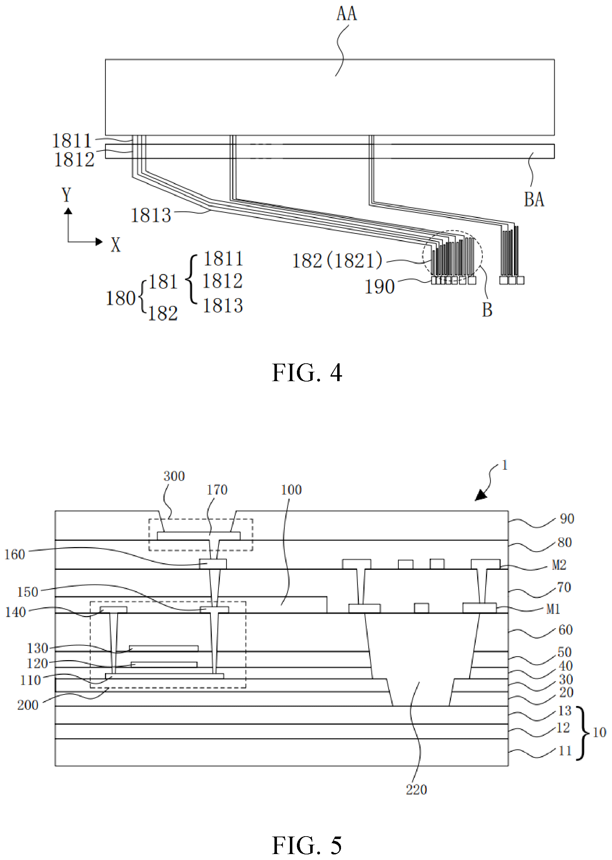

The flexible touch display panel 1 may include a plurality of pixels PX and touch electrodes 170 arranged in arrays in the display region AA, and the plurality of pixels PX may include pixels, such as red pixels, green pixels, or blue pixels, and may further include white pixels. The touch technology of the embodiments of the present application is mutual capacitance touch, and the touch electrode 170 may include a transmitting electrode 171 and a receiving electrode 172. As shown in FIG. 5, the flexible touch display panel 1 may be an OLED display panel, the pixel PX may include an organic light-emitting element 300(such as an organic light-emitting diode OLED) and a pixel driving circuit 200 for driving the organic light-emitting diode OLED, and the touch electrode 170 may be disposed on the organic light-emitting diode OLED. The organic light-emitting diode OLED includes an anode 170, a cathode, and a light-emitting layer (not shown) located between the anode 170 and the cathode.

The pixel driving circuit 200 may include a plurality of thin film transistors and capacitors, and the pixel driving circuit 200 may adopt a 6T1C architecture, a 7T1C architecture, or the like. The thin film transistor includes an active layer 110, a gate, a source 140, a drain 150, and the like. It can be understood that the pixel driving circuit 200 and the organic light-emitting diode involve a plurality of metal layers and inorganic insulating layers and organic insulating layers between different metal layers, and it can be understood that these inorganic insulating layers and organic insulating layers may extend across the entire surface to the non-display region NA.

In some embodiments, the non-display region NA is disposed around the display region AA, and the non-display region NA includes a border region around the display region AA. In order to realize the narrow border technology of the flexible touch display panel 1, the bonding region PA of the lower border is generally bent to the back side (pad bending) of the display panel to narrow the lower border.

Referring to FIG. 1, in some embodiments of the present application, the non-display region NA includes a bonding region PA and a bending region BA, the bending region BA is located between the display region AA and the bonding region PA, and the bending region BA is bent to bond the bonding region PA to a back side (a side facing away from light) of the flexible touch display panel 1. The bonding region PA is bonded to a driving chip, the driving chip can transmit data driving signals (data signals), and other signals such as touch signals may also be integrated on the driving chip. The driving chip is bent to the back side of the flexible touch display panel 1 along with the bonding region PA.

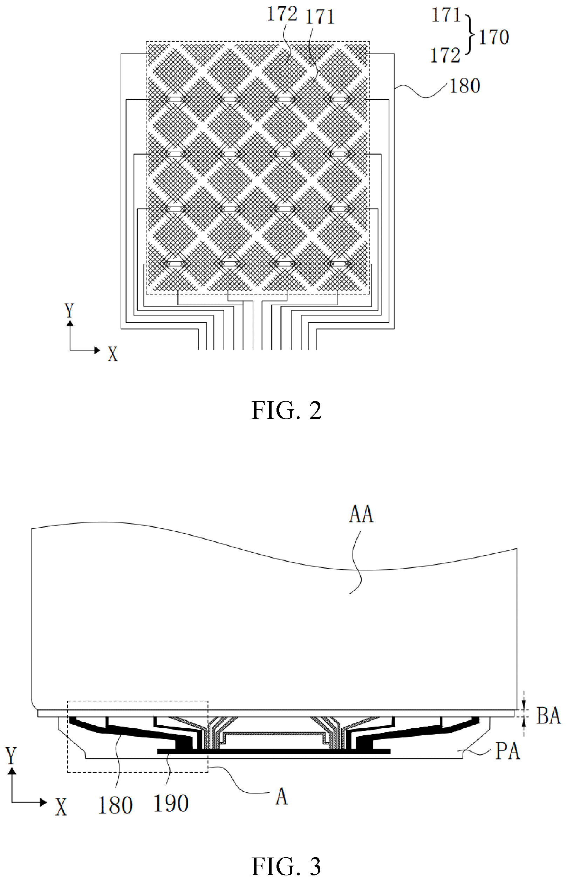

Referring to FIG. 2, the touch electrodes 170 includes a plurality of transmitting electrodes 171 arranged in an array and a plurality of receiving electrodes 172 arranged in an array. The transmitting electrodes 171 and the receiving electrodes 172 may be arranged in the same layer, and the transmitting electrodes 171 and the receiving electrodes 172 are alternately arranged and do not overlap with each other. The transmitting electrodes 171 arranged along the first direction X are electrically connected in sequence, and the receiving electrodes 172 arranged along the second direction Y are electrically connected in sequence.

The transmitting electrodes 171 and the receiving electrodes 172 are respectively electrically connected to the corresponding touch traces 180, and the touch traces 180 are electrically connected to the driving chip from the display region AA through the non-display region NA to transmit touch signals.

Each transmitting electrode 171 and the receiving electrode 172 may be in a metal grid shape. The touch trace 180 may also be in a metal grid shape. Obviously, the overall line width of the metal grid shape of the touch trace 180 is smaller than the overall line width of the metal grid shapes of the transmitting electrode 171 and the receiving electrode 172.

In the related art, the winding design of the touch traces 180 is performed or the line width is increased at the border of the flexible touch display panel 1, so as to reduce the resistance difference between different touch traces 180. However, for the mutual capacitance touch control in the form of an active pen, since the touch accuracy of the active pen is far greater than the touch accuracy of the finger, the touch trace 180 having wider line width at the border or more winding designs at the border will cause a higher risk of false touch of the active pen.

In view of the above defects, in the embodiments of the present application, the bonding terminals connected to the touch traces 180 are designed in the bonding region PA, so that on the one hand, the touch traces can extend to the bonding region PA, the length of the touch trace is increased, and the design of excessive winding at the border or widening of the line width can be avoided, thereby addressing the problem of false touch of the active pen; on the other hand, since the bonding region has a larger space (the border is narrow, which limits the winding space), for the impedance matching between the touch traces, it does not need to consider the limitation of the space, the line width of the touch trace does not need to be widened, and the impedance between the touch traces can be substantially consistent.

Specifically, as shown in FIG. 3 and FIG. 4, the flexible touch display panel 1 includes a plurality of bonding terminals 190 located in the bonding region PA, and the bonding terminals 190 are configured to electrically connect the touch traces 180 to the driving chip. Each of the touch traces 180 includes a first trace portion 181 and a second trace portion 182 connected to each other, the first trace portion 181 is connected to the corresponding touch electrode 170, and the second trace portion 182 is connected to the corresponding bonding terminal 190, that is, the first trace portion 181 is relatively close to the touch electrode 170, and the second trace portion 182 is relatively close to the bonding terminal 190. The first trace portion 181 extends from the display region AA to the bonding region PA through the bending region BA. The second trace portion 182 is located in the bonding region PA, and the second trace portion 182 includes a serpentine trace 1821, that is, a winding design of the touch trace 180 is located in the bonding region PA.

In the embodiments of the present application, the winding design (the serpentine trace 1821) of the touch trace 180 is arranged in the bonding region PA, on the one hand, the problem of false touch of the active pen can be addressed, and on the other hand, since the bonding region PA has a larger space (the border is narrow, which limits the winding space), for the impedance matching between the touch traces 180, it does not need to consider the limitation of the space, the line width of the touch trace 180 does not need to be widened, and the impedance between the touch traces 180 can be substantially consistent.

The line width of the touch trace 180 in the related art is 50 microns to 10 microns, and the line width of the present application can be set uniformly and can be controlled at 10 microns or even below. In the embodiments of the present application, the widths of the touch traces 180 are equal, the absolute value of the difference between the line widths of any two of the touch traces 180 at various positions is less than 0.05 microns, the line width difference within this range is negligible, and it can be considered that the line widths are equal.

In some embodiments of the present application, an absolute value of a difference between impedances of any two of the touch traces 180 is less than or equal to 5%. Within this range, the influence of the impedance difference between the touch traces 180 on the touch signal is negligible.

In some embodiments of the present applications, the flexible touch display panel 1 includes a pixel driving circuit 200, a light-emitting layer, and a thin film encapsulation layer 210 that are stacked. The touch electrodes 170 are disposed on the thin film encapsulation layer 210, the bonding terminal 190 is disposed in the same layer as some of the metal layers of the pixel driving circuit 200, a part of each touch trace 180 is disposed on the thin film encapsulation layer 210, and the other part of the touch trace 180 is disposed in the same layer as some of the metal layers of the pixel driving circuit 200.

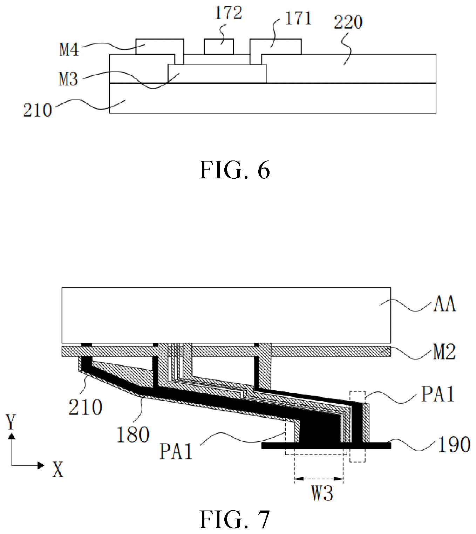

The following takes a specific panel structure as an example to explain the flexible touch display panel 1 of the present application. Referring to FIG. 5 and FIG. 6, the flexible touch display panel 1 of the present application may include the following structures.

A substrate 10 is included and may be made of an organic material having insulating properties and being flexible, so as to enable heat treatment at a temperature equal to or greater than approximately 450° C. The substrate 10 may be formed, for example, as a single layer made of polyimide, or as multiple layers formed by repeatedly stacking polyimide through coating and curing. The substrate 10 may be a flexible substrate 10 formed by coating and curing polymeric material such as polyimide on a support substrate 10 (not shown). In this case, the substrate 10 may be formed into multiple layers by repeatedly coating and curing the polymeric material. The support substrate 10 may be formed of glass, metal, or ceramic, and polyimide may be coated on the support substrate 10 using coating processes such as spin coating, slit coating, inkjet coating, or the like. The support substrate 10 may be removed in subsequent processes. In some embodiments of the present application, the substrate 10 may include a first polyamide layer 11, a first barrier layer 12, and a second polyimide layer 13 that are sequentially stacked. The material of the first barrier layer 12 includes, but is not limited to, silicon dioxide.

A second barrier layer 20 is included and is formed on the substrate 10. The barrier layer may include various insulating materials (for example, silicon oxide or silicon nitride), and may have a single-layer or multi-layer structure, which is not limited herein. The second barrier layer 20 may be used as a planarization layer on the upper surface of the substrate 10 and may block or prevent impurities and moisture from infiltrating into the display unit (i.e., the organic light-emitting element 300 / light-emitting layer) from the substrate 10.

The second barrier layer 20 may be a single-layer structure or a multi-layer structure. A first barrier sublayer and a second barrier sublayer may be included. The second barrier sublayer is formed on the first barrier sublayer, for example, the first barrier sublayer may be formed between the second barrier sublayer and the substrate 10. In practical applications, the first barrier sublayer may be formed by depositing silicon oxide, and subsequently, the second barrier sublayer may be formed by depositing silicon nitride by an in-situ process. In this case, the first barrier sublayer may be formed of SiOₓ or SiON (which may enhance the interfacial bonding performance between the barrier layer and the substrate 10), and the first barrier sublayer may be formed to have a thickness of approximately 100 nm to approximately 600 nm. The second barrier sublayer may be formed of SiNₓ or SiON (which may enhance the interfacial bonding performance between the barrier layer 110 and the subsequently disposed buffer layer 30), and the second barrier sublayer may be formed to have a thickness of approximately 50 nm to approximately 200 nm.

A buffer layer 30 is included and may be formed on the second barrier layer 20. The buffer layer 30 may include one or more inorganic insulating layers including materials such as silicon oxide or silicon nitride. The buffer layer 30 may be used as a planarization layer on the upper surface of the substrate 10 and can block or stop impurities and moisture from infiltrating into a display unit (e., an organic light-emitting element 300) from the substrate 10.

The buffer layer 30 includes, for example, a first buffer sublayer formed of silicon nitride and a second buffer sublayer formed of silicon oxide. The second barrier layer and the first buffer sublayer may be formed of silicon nitride having the same film quality (e.g., the same density and the same film stress), and an oxide film may be positioned at an interface between the second barrier layer and the first buffer sublayer. The oxide film may be a natural oxide film formed between processes of forming the second barrier layer and forming the first buffer sublayer and may have a thickness of several tens of angstroms or less. In practical applications, the thickness of the first buffer sublayer may be approximately 50 nm to 100 nm, and the thickness of the second buffer sublayer may be approximately 100 nm to 300 nm.

An active layer 110 is included and is formed on the buffer layer 30, where the active layer 110 is formed of polysilicon. The active layer 110 is divided into a channel region, a source 140 region and a drain 150 region formed on both sides of the channel region. The channel region of the semiconductor is undoped polycrystalline silicon, i.e., intrinsic semiconductor. The source 140 region and the drain 150 region are polysilicon doped with conductive impurities, i.e., impurity semiconductors. The impurities doped in the source 140 region and the drain 150 region may be any of P-type impurities and N-type impurities. In other embodiments, the material of the active layer 110 may further include at least one of amorphous silicon and a metal oxide semiconductor layer.

A first gate 120 insulating layer 40 is included and is formed on the active layer 110. The first gate 120 insulating layer 40 may be multiple layers or a single layer including at least one of tetraethyl orthosilicate (TEOS), silicon nitride, and silicon oxide.

A first gate 120 is included and is formed on the gate insulating layer, and the first gate 120 overlaps with the channel region. The first gate 120 may be formed of a low-resistance material such as Al, Ti, Mo, Cu, Ni, or their alloys, or a material with high corrosion resistance, as multiple layers or a single layer.

A second gate insulating layer 50 is included and is formed on the first gate 120, and the second gate insulating layer 50 may be multiple layers or a single layer including at least one of tetraethylorthosilicate (TEOS), silicon nitride, and silicon oxide.

A second gate 130 is included and is formed on the second gate 130 insulating layer 50, and the second gate 130 overlaps with the first gate 120. The second gate 130 may be formed of a low-resistance material such as Al, Ti, Mo, Cu, Ni, or their alloys, or a material with high corrosion resistance, as multiple layers or a single layer.

An interlayer insulating layer 60 is included and is formed on the second gate 130. The interlayer insulating layer 60 may be formed as multiple layers or a single layer formed of, for example, tetraethyl orthosilicate (TEOS), silicon nitride, or silicon oxide. The interlayer insulating layer 60, the second gate 130 insulating layer 50, and the first gate 120 insulating layer 40 include a plurality of source 140 contact holes and a plurality of drain 150 contact holes, and the source 140 region and the drain 150 region are exposed through the source 140 contact hole and the drain 150 contact hole, respectively.

A first metal layer M1 is included and includes a plurality of sources 140 and a plurality of drains 150. The first metal layer M1 is formed on the first interlayer insulating layer 60. The source 140 is connected to the source 140 region through a source contact hole, and the drain 150 is connected to the drain region through a drain contact hole. The source 140 and the drain 150 may be formed of a low-resistance material such as Al, Ti, Mo, Cu, Ni, or their alloys, or a material with high corrosion resistance as multiple layers or a single layer. For example, the source 140 and the drain 150 may be a triple layer of Ti/Cu/Ti, Ti/Ag/Ti, Ti/Al/Ti, or Mo/Al/Mo, and others.

A passivation layer 100 is included and formed on the source 140 and the drain 150. The passivation layer 100 may be formed as multiple layers or a single layer of at least one of tetraethyl orthosilicate (TEOS), silicon nitride, and silicon oxide, and may be made of organic materials with low dielectric constants (such as polyimide).

A first planarization layer 70 is included and is formed on the passivation layer 100. The first planarization layer 70 is an organic material, including but not limited to a polyimide material. The first planarization layer 70 and the passivation layer 100 are provided with a first through hole, and the drain electrode 150 is exposed through the first through hole.

A second metal layer M2 is included and is formed on the first planarization layer 70 and includes a plurality of connection electrodes. The connection electrode is electrically connected to the drain 150 through the first through hole.

A second planarization layer 80 is included and is formed on the second metal layer M2. The second planarization layer 80 is an organic material, including but not limited to a polyimide material. The second planarization layer 80 is provided with a second through hole through which the connection electrode is exposed.

A plurality of anodes 170 are included and are formed on the second planarization layer 80. The anode 170 includes, but is not limited to, a composite film layer of ITO/Ag/ITO. The anode 170 is electrically connected to the connection electrode through the second through hole.

A plurality of pixel definition layers 90 are included and are formed on the anode 170. The pixel definition layer 90 has a plurality of openings through which the anodes 170 are exposed. The pixel definition layer 90 may be formed of materials including resin, such as polyacrylate or polyimide, and organic materials such as silicates.

A light-emitting layer is included and is formed in the openings of the pixel definition layer 90. The light-emitting layer is composed of one or more emission layers, a hole injection layer (HIL), a hole transport layer (HTL), an electron transport layer (ETL), and an electron injection layer (EIL). In the case where the organic light-emitting layer includes all the aforementioned layers, the hole injection layer (HIL) may be located on the anode 170, and the hole transport layer (HTL), the emission layer, the electron transport layer (ETL), and the electron injection layer (EIL) may be sequentially layered on the hole injection layer (HIL). A cathode is included and is formed on the pixel definition layer 90 and the light-emitting layer.

A thin film encapsulation layer 210 is included and is formed on the cathode. The thin film encapsulation layer 210 may be formed by alternating one or more organic layers with one or more inorganic layers. Either the inorganic layer or the organic layer may each be provided in multiple numbers.

The organic layers are formed of polymers and can be a single layer or a laminate layer made from materials like polyethylene terephthalate, polyimide, polycarbonate, epoxy resin, polyethylene, and polyacrylate. The organic layer may be formed of polyacrylate, specifically including substances obtained by polymerizing a monomer composition including diacrylate-based and triacrylate-based monomers. The monomer composition may further include a monoacrylate-based monomer. In addition, the monomer composition may also include known photoinitiators such as TPO, but the monomer composition is not limited thereto. The inorganic layer may be a laminated layer or a monolayer including a metal oxide or metal nitride. For example, the inorganic layer may include any one of SiNₓ, Al₂O₃, SiO₂, or TiO₂.

An outermost layer of the thin film encapsulation layer 210 exposed to the exterior is formed of an inorganic layer to prevent moisture transmission into the interior of the organic light-emitting diode display. The thin film encapsulation layer 210 may include at least one interlayer structure, with at least one organic layer is inserted between at least two inorganic layers. Furthermore, the thin film encapsulation layer 210 may include at least one interlayer structure with at least one inorganic layer inserted between at least two organic layers.

The thin film encapsulation layer 210 may include a first inorganic layer, a first organic layer, and a second inorganic layer sequentially disposed on the cathode. In addition, the thin film encapsulation layer 210 may include a first inorganic layer, a first organic layer, a second inorganic layer, a second organic layer, and a third inorganic layer sequentially disposed on the cathode. In addition, the thin film encapsulation layer 210 may include a first inorganic layer, a first organic layer, a second inorganic layer, a second organic layer, a third inorganic layer, a third organic layer, and a fourth inorganic layer sequentially disposed on the cathode.

In addition, a metal halide layer may additionally be included between the cathode and the first inorganic layer, where the metal halide layer includes, for example, LiF. The metal halide layer can prevent damage from into the cathode when the first inorganic layer is formed by sputtering or plasma deposition methods.

The first organic layer has an area smaller than an area of the second inorganic layer, and the second organic layer has an area smaller than an area of the third inorganic layer. Further, the first organic layer is completely covered by the second inorganic layer, and the second organic layer is completely covered by the third inorganic layer.

A third metal layer M3 is included and is formed on the thin film encapsulation layer 210. The third metal layer M3 may be formed of a low-resistance material such as Al, Ti, Mo, Cu, Ni, or their alloys, or a material with high corrosion resistance, as multiple layers or a single layer.

A first insulating layer 220 is included and is formed on the third metal layer M3. The first insulating layer 220 may be multiple layers or a single layer including at least one of tetraethyl orthosilicate (TEOS), silicon nitride, and silicon oxide.

A fourth metal layer M4 is included and is formed on the first insulating layer 220. The fourth metal layer M4 may be formed of a low-resistance material such as Al, Ti, Mo, Cu, Ni, or their alloys, or a material with high corrosion resistance, as multiple layers or a single layer.

The fourth metal layer M4 may further be covered with an insulating protection layer, and the insulating protection layer may be multiple layers or a single layer including at least one of tetraethylorthosilicate (TEOS), silicon nitride, silicon oxide, and the like.

Referring to FIG. 5, since the bending region BA needs to be bent, and in order to reduce the influence of the stress of the inorganic film layer, in the embodiment of the present application, the inorganic film layer in the bending region BA is grooved to form a groove, and the groove is filled with the organic filling layer 220. Specifically, the inorganic film layers above and below the source electrode 140 and the drain electrode 150 are hollowed out, and the groove penetrates to the surface of the substrate 10. That is, the groove of the bending region BA penetrates the passivation layer 100, the first interlayer insulating layer 60, the second gate 130 insulating layer 50, the first gate 120 insulating layer 40, the buffer layer 30, and the second barrier layer 20 to expose the second polyimide layer 13.

The groove may be filled with an organic material of the first planarization layer 70 and formed together with the first planarization layer 70. The organic filling layer 220 may be formed separately.

In order to avoid excessive thickness of the film layers in the bending region BA, a trace transfer design may be employed for the touch traces 180. That is, when the touch trace 180 located on the thin film encapsulation layer 210 passes through the bending region BA, the metal layer of the pixel driving circuit 200 is used for trace changing, so that the part of the touch trace 180 located in the bending region BA is closer to the bending neutral layer, thereby reducing the bending stress and avoiding trace breakage in the bending region BA.

Specifically, the touch trace 180 may be switched to the metal layer where the first power line 210 is located in the bending region BA. The first power line 210 is electrically connected to the pixel driving circuit 200, specifically, the first power line 210 is a low potential power line Vss and is electrically connected to the cathode to provide a cathode voltage.

Referring to FIG. 4, the touch trace 180 includes a first trace portion 181 and a second trace portion 182 connected to each other, the first trace portion 181 is connected to the corresponding touch electrode 170, and the second trace portion 182 is connected to the corresponding bonding terminal 190.

The first trace portion 181 includes a first line segment 1811, a transfer line 1812, and a second line segment 1813 connected in sequence, the first line segment 1811 is connected to the corresponding touch electrode 170, and the second line segment 1813 is electrically connected to the second trace portion 182.

In some embodiments of the present application, the first line segment 1811, the second line segment 1813, and the second trace portion 182 are disposed in the same layer on the thin film encapsulation layer 210. The transfer line 1812 is located in the bending region BA, and the transfer line 1812 and the first power line 210 are disposed in the same layer. In this way, a part of the touch trace 180 located in the bending region BA can be changed to the metal layer where the first power line 210 is located, which can not only reduce the thickness of the film layer in the bending region BA, but also make the part of the touch trace 180 located in the bending region BA closer to the bending neutral layer, thereby reducing the bending stress and avoiding trace breakage in the bending region BA.

Specifically, in some embodiments, the touch trace 180 and the first power line 210 are both double-layered conductive layers, that is, both double-layer traces are used, so that trace impedance can be reduced.

Referring to FIG. 4 to FIG. 6, the touch trace 180 and the first power line 210 each include a top conductive layer and a bottom conductive layer. The first metal layer M1 includes the bottom conductive layer of the transfer line 1812 and the bottom conductive layer of the first power line 210. The second metal layer M2 includes the top conductive layer of the transfer line 1812 and the top conductive layer of the first power line 210. The third metal layer M3 includes the bottom conductive layer of the first line segment 1811, the bottom conductive layer of the second line segment 1813, and the bottom conductive layer of the second trace portion 182. The fourth metal layer M4 includes the top conductive layer of the first line segment 1811, the top conductive layer of the second line segment 1813, the top conductive layer of the second trace portion 182, and the touch electrode 170.

That is, the double-layered conductive layer structure of the first power line 210 is formed by the first metal layer M1 and the second metal layer M2, the double-layered conductive layer structure of the transfer line 1812 is formed by the first metal layer M1 and the second metal layer M2, and the double-layered conductive layer structures of the first line segment 1811, the second line segment 1813, and the second trace portion 182 are formed by the third metal layer M3 and the fourth metal layer M4. Both the receiving electrode 172 and the transmitting electrode 171 are formed by the fourth metal layer M4. In other embodiments, the receiving electrode 172 and the transmitting electrode 171 may be formed by a third metal layer M3, or the receiving electrode 172 is formed by one of the third metal layer M3 and the fourth metal layer M4, and the transmitting electrode 171 is formed by the other of the third metal layer M3 and the fourth metal layer M4.

It may be understood that, if the transmitting electrode 171 and the receiving electrode 172 are formed by a same metal layer (the third metal layer M3 or the fourth metal layer M4), the electrode patterns of one of the transmitting electrode 171 and the receiving electrode 172 is directly electrically connected to each other by the patterns in this metal layer, and the electrode patterns of the other one of the transmitting electrode 171 and the receiving electrode 172 may be electrically connected to each other by forming a bridge layer in another metal layer.

Referring to FIGs. 3, 4 and 7, the orthographic projection of the first line segment 1811 on the substrate of the flexible touch display panel 1, the orthographic projection of the second line segment 1813 on the substrate, and the orthographic projection of the second trace portion 182 on the substrate are all located within the orthographic projection of the first power line 210 on the substrate. That is, a part of the touch traces 180 except the other part in the trace transfer region overlaps with the first power line 210. By designing the winding of the touch trace 180 in the bonding region PA, that is, the serpentine trace 1821 of the second trace portion 182 is disposed in the bonding region PA, the winding portion with more trace segments may overlap with the first power line 210, which increases the overall overlapping area of the touch trace 180 and the first power line 210. Since the first power line 210 outputs a stable constant low-potential signal, it can function as a shielding layer, reducing the interference of other signal lines below the first power line 210 on the touch signal.

Further, the serpentine trace 1821 includes a plurality of first winding portions 18211 extending along a first direction X, and a plurality of second winding portions 18212 extending along a second direction Y intersecting the first direction X. The first winding portion 18211 and the second winding portion 18212 are connected end to end in sequence and arranged alternately. The serpentine traces 1821 are arranged in a circuitous shape.

In some embodiments, the length of the first winding portion 18211 is less than the length of the second winding portion 18212. In other embodiments, the length of the first winding portion 18211 is greater than the length of the second winding portion 18212.

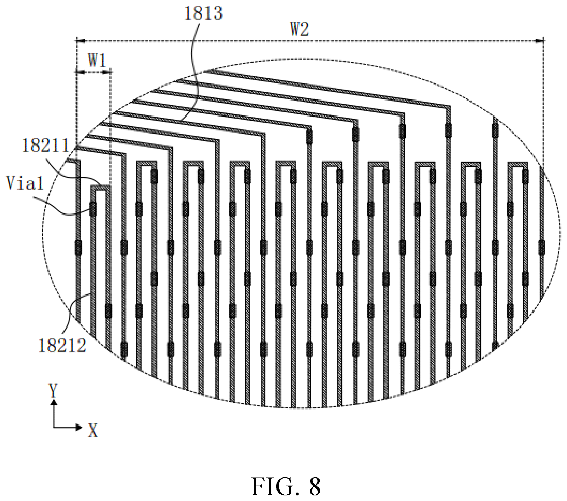

As shown in FIGs. 7 and 8, the serpentine trace 1821 includes a starting end and a terminal end, and a vertical distance W1 between the starting end and the terminal end is less than a line width W3 of the first power line 210. In this way, the winding of the touch trace 180 (i.e., the serpentine trace 1821) can completely fall within the region where the first power line 210 is located, which can play a good shielding role.

Further, the winding of the touch trace 180 may be designed in a centralized manner in a plurality of regions. As shown in FIG. 7, the bonding region PA includes a plurality of winding regions PA1, the number of the winding regions PA1 is less than the number of the touch traces 180, and the plurality of serpentine traces 1821 are located in the corresponding winding regions PA1. The number of corresponding serpentine traces 1821 in each winding region PA1 may be different or the same. The size of each winding region PA1 may be the same or different.

Still referring to FIG. 7, the orthographic projections of the winding regions PA1 on the substrate are located within the orthographic projection of the first power line 210 on the substrate. In other words, as shown in FIG. 8, the width W2 of the winding region PA1 is less than or equal to the width W3 of the first power line 210 corresponding to the winding region PA1. In this way, a large number of winding segments can be shielded and protected by the first power line 210.

Referring to FIG. 6 and FIG. 8, since the touch trace 180 is designed as a double-layered conductive layer, one or more connection holes Via1 need to be provided in the insulating layer between the third metal layer M3 and the fourth metal layer M4 to realize electrical connection. A plurality of connection hole Via1 may be provided at intervals along the length extension direction of the touch trace 180 to connect the upper and lower conductive layers. Spacing between the connection holes Via1 may be unequal and may be equal.

Specifically, the first insulating layer 220 is provided with a plurality of first connection holes Via1, and the top conductive layer of each of the touch traces 180 is connected to the bottom conductive layer of the touch trace 180 through at least one corresponding first connection hole Via1. The first connection holes Via1 may be distributed in an array.

In the bonding region PA, the first connection holes Via1 may be distributed in an array along a first direction X and a second direction Y. Since the touch trace 180 is wound in the bonding region PA, there are circuitous metal line segments with a higher density in the winding region PA1 of the bonding region PA, and there are densely arranged first connection holes Via1. In order to avoid the occurrence of short circuits due to too close distance between the first connection holes Vial, the first connection holes Via1 in two adjacent rows are distributed in a staggered manner, and the first connection holes Via1 in two adjacent columns are distributed in a staggered manner. The first direction X is a row direction, and the second direction Y is a column direction.

In summary, the embodiments of the present application provide a flexible touch display panel 1, including a display region AA, a bonding region PA, and a bending region BA located between the display region AA and the bonding region PA. The flexible touch display panel 1 includes a plurality of bonding terminals 190 located in the bonding region PA, a plurality of touch electrodes 170 located in the display region AA and distributed in an array, and a plurality of touch traces 180. Each of the touch traces 180 includes a first trace portion 181 and a second trace portion 182 connected to each other, the first trace portion 181 is connected to the corresponding touch electrode 170, and the second trace portion 182 is connected to the corresponding bonding terminal 190; The first trace portion 181 extends from the display region AA to the bonding region PA through the bending region BA, the second trace portion 182 is located in the bonding region PA, and the second trace portion 182 includes a serpentine trace 1821. In the embodiments of the present application, the winding design (the serpentine trace 1821) of the touch trace 180 is arranged in the bonding region PA, on the one hand, the problem of false touch of the active pen can be addressed, and on the other hand, since the bonding region PA has a larger space (the border is narrow, which limits the winding space), for the impedance matching between the touch traces 180, it does not need to consider the limitation of the space, the line width of the touch trace 180 does not need to be widened, and the impedance between the touch traces 180 can be substantially consistent.

In the above embodiments, different parts of the technical solution are given different levels of description in different embodiments, and some features that are not specified in a particular embodiment can be found in the relevant descriptions of other embodiments.

The flexible touch display panel provided by the embodiments of the present application are described in detail above, specific embodiments have been applied herein to illustrate the principles and implementation of the present application, and the above description of the embodiments is only used to help understand the technical solutions and the core ideas of the present application. Those skilled in the art should understand that modifications can still be made to the technical solutions of the aforementioned embodiments, or some technical features can be equivalently replaced. Thus, these modifications or substitutions shall fall within the scope of the present application.

## Claims

1. A flexible touch display panel, **characterized by** comprising a display region, a bonding region, and a bending region located between the display region and the bonding region, wherein the flexible touch display panel comprises:
a plurality of bonding terminals located in the bonding region;
a plurality of touch electrodes arranged in an array and located in the display region; and
a plurality of touch traces, wherein each of the touch traces comprises a first trace portion and a second trace portion connected to each other, the first trace portion is connected to a corresponding one of the touch electrodes, and the second trace portion is connected to a corresponding one of the bonding terminals;
wherein the first trace portion extends from the display region to the bonding region through the bending region, and the second trace portion is located in the bonding region.

2. The flexible touch display panel as claimed in claim 1, wherein the second trace portion comprises a serpentine trace.

3. The flexible touch display panel as claimed in claim 2, wherein the flexible touch display panel comprises a pixel driving circuit, an organic light-emitting element, and a thin film encapsulation layer stacked in sequence;
wherein the touch electrodes are disposed on the thin film encapsulation layer, the bonding terminals are disposed in a same layer as some of metal layers of the pixel driving circuit, a part of each of the touch traces is disposed on the thin film encapsulation layer, and another part of each of the touch trace is disposed in a same layer as some of the metal layers of the pixel driving circuit.

4. The flexible touch display panel as claimed in claim 3, wherein the pixel driving circuit further comprises a first power line electrically connected to the organic light-emitting element;
wherein the first trace portion comprises a first line segment, a transfer line, and a second line segment connected in sequence, the first line segment is connected to a corresponding one of the touch electrodes, the second line segment is electrically connected to the second trace portion, the transfer line is located in the bending region, and the transfer line is disposed in a same layer as the first power line; and
the first line segment, the second line segment, and the second trace portion are disposed in a same layer on the thin film encapsulation layer.

5. The flexible touch display panel as claimed in claim **4,** wherein an orthographic projection of the first line segment on a substrate of the flexible touch display panel, an orthographic projection of the second line segment on the substrate, and an orthographic projection of the second trace portion on the substrate are all located within an orthographic projection of the first power line on the substrate.

6. The flexible touch display panel as claimed in claim 5, wherein the serpentine trace comprises a plurality of first winding portions extending along a first direction and a plurality of second winding portions extending along a second direction intersecting the first direction, and the first winding portions and the second winding portions are sequentially connected end to end and alternately arranged;
wherein the serpentine trace comprises a starting end and a terminal end, and a vertical distance between the starting end and the terminal end is less than a line width of the first power line.

7. The flexible touch display panel as claimed in claim 5, wherein the bonding region comprises a plurality of winding regions, the number of the winding regions is less than the number of the touch traces, and a plurality of serpentine traces are each located in a corresponding one of the winding regions;
wherein orthographic projections of the winding regions on the substrate are located within an orthographic projection of the first power line on the substrate.

8. The flexible touch display panel as claimed in claim **4,** wherein the touch trace and the first power line are both double-layered conductive layers.

9. The flexible touch display panel as claimed in claim 8, wherein the flexible touch display panel comprises:
a first metal layer comprising a source and a drain of the pixel driving circuit;
a first planarization layer disposed on the first metal layer;
a second metal layer disposed on the first planarization layer;
a second planarization layer disposed on the second metal layer;
the organic light-emitting element disposed on the second planarization layer;
the thin film encapsulation layer disposed on the organic light-emitting element;
a third metal layer disposed on the thin film encapsulation layer;
a first insulating layer disposed on the third metal layer; and
a fourth metal layer disposed on the first insulating layer;
wherein the first metal layer further comprises a bottom conductive layer of the transfer line and a bottom conductive layer of the first power line;
the second metal layer comprises a top conductive layer of the transfer line and a top conductive layer of the first power line;
the third metal layer comprises a bottom conductive layer of the first line segment, a bottom conductive layer of the second line segment, and a bottom conductive layer of the second trace portion; and
the fourth metal layer comprises a top conductive layer of the first line segment, a top conductive layer of the second line segment, a top conductive layer of the second trace portion, and the touch electrodes.

10. The flexible touch display panel as claimed in claim 9, wherein the first insulating layer is provided with a plurality of first connection holes, and a top conductive layer of each of the touch traces is connected to a bottom conductive layer of the touch trace through corresponding at least one of the first connection holes.

11. The flexible touch display panel as claimed in claim 10, wherein the first connection holes located in the bonding region are arranged in an array along a first direction and a second direction, the first direction is a row direction, and the second direction is a column direction, wherein the first connection holes in two adjacent rows are arranged in a staggered manner, and the first connection holes in two adjacent columns are arranged in a staggered manner.

12. The flexible touch display panel as claimed in claim 10, wherein the plurality of connection holes are arranged along an extending direction of a length of the touch traces to connect the top conductive layer and the bottom conductive layer of a same one of the touch traces.

13. The flexible touch display panel as claimed in claim 2, wherein an absolute value of a difference in line width at various points of each of the touch traces is less than 0.05 microns.

14. The flexible touch display panel as claimed in claim 2, wherein an absolute value of a difference between impedances of any two of the touch traces is less than or equal to 5%.

15. A flexible touch display panel, **characterized by** comprising a display region, a bonding region, and a bending region provided between the display region and the bonding region, wherein the flexible touch display panel comprises:
a plurality of bonding terminals located in the bonding region, wherein the bonding terminals are electrically connected to a driving chip;
a plurality of touch electrodes arranged in an array and located in the display region; and
a plurality of touch traces, wherein each of the touch traces comprises a first trace portion and a second trace portion connected to each other, the first trace portion is connected to a corresponding one of the touch electrodes, and the second trace portion is connected to a corresponding one of the bonding terminals;
wherein the first trace portion extends from the display region to the bonding region through the bending region, the second trace portion is located in the bonding region, and the second trace portion comprises a serpentine trace.

16. The flexible touch display panel as claimed in claim 15, wherein the flexible touch display panel comprises a pixel driving circuit, an organic light-emitting element, and a thin film encapsulation layer stacked in sequence;
wherein the touch electrodes are disposed on the thin film encapsulation layer, the bonding terminals are disposed in a same layer as some of metal layers of the pixel driving circuit, a part of each of the touch traces is disposed on the thin film encapsulation layer, and another part of each of the touch trace is disposed in a same layer as some of the metal layers of the pixel driving circuit.

17. The flexible touch display panel as claimed in claim 16, wherein the pixel driving circuit further comprises a first power line electrically connected to the organic light-emitting element;
wherein the first trace portion comprises a first line segment, a transfer line, and a second line segment connected in sequence, the first line segment is connected to a corresponding one of the touch electrodes, the second line segment is electrically connected to the second trace portion, the transfer line is located in the bending region, and the transfer line is disposed in a same layer as the first power line; and
the first line segment, the second line segment, and the second trace portion are disposed in a same layer on the thin film encapsulation layer.

18. The flexible touch display panel as claimed in claim 17, wherein an orthographic projection of the first line segment on a substrate of the flexible touch display panel, an orthographic projection of the second line segment on the substrate, and an orthographic projection of the second trace portion on the substrate are all located within an orthographic projection of the first power line on the substrate.

19. The flexible touch display panel as claimed in claim 18, wherein the serpentine trace comprises a plurality of first winding portions extending along a first direction and a plurality of second winding portions extending along a second direction intersecting the first direction, and the first winding portions and the second winding portions are sequentially connected end to end and alternately arranged;
wherein the serpentine trace comprises a starting end and a terminal end, and a vertical distance between the starting end and the terminal end is less than a line width of the first power line.

20. The flexible touch display panel as claimed in claim 18, wherein the bonding region comprises a plurality of winding regions, the number of the winding regions is less than the number of the touch traces, and a plurality of serpentine traces are each located in a corresponding one of the winding regions;
wherein orthographic projections of the winding regions on the substrate are located within an orthographic projection of the first power line on the substrate.
